# EUROPEAN PATENT APPLICATION

(11) **EP 1 898 146 A1**
(43) Date of publication of application: **12.03.2008**
(21) Application number: 06120426.9
(22) Date of filing: 11.09.2006
(51) Int. Cl.: F21S 8/02, F21S 8/10, F21Y 101/02

(54) **Recessed LED luminaire**

(71) Applicant: Hella lighting Finland Oy, 24280 Salo (FI)
(72) Inventor: Riionheimo, Miikka, 20760, Piispanristi (FI)
(74) Representative: Roitto, Klaus

(57) **Abstract**

The present invention relates to a lamp comprising a reflector (1), at least one LED (4) which is directed towards the reflector, and a lens (3) for providing light reflected from the reflector (1) to the surroundings of the lamp. In order to provide a lamp which in addition to being able to emit efficiently light, can be mounted on the most various mounting sites and which provides a reliable function, the lamp is characterised in that it comprises a frame (2) which is of a material having a good thermal conductivity, the at least one LED (4) is attached to the frame (2) in such a way that heat generated by the LED is transferred to the frame (2), and the frame (2) is positioned between the reflector (1) and the lens (3) and comprises a heat emitting surface (12) for transferring the heat to the surroundings of the lamp. The invention relates also to a combination of a mounting site and such a lamp.

## Description

### Background of the invention

The present invention relates to a lamp comprising a reflector, at least one LED which is directed to emit light towards the reflector, and a light transparent lens for passing light reflected from the reflecting surface of the reflector to the surroundings of the lamp. The lamp is especially suited to be mounted as an interior light for different types of vehicles, such as trucks and buses, whereby it is mounted at a mounting site which typically is formed at a wall of the vehicle.

The present invention relates also to a combination of such a lamp and a mounting site.

The problem with prior art lamps is how to design the lamps in such a way that heat generated by the LEDs is effectively guided out from the lamp in order to prevent overheating and possible breakage of the lamp. The lifetime of the LEDs will shorten if they are not adequately cooled. Also, the light effect of the LEDs will be reduced if the LEDs overheat. These problems concern especially lamps which are provided with highly efficient LEDs. The LEDs can be mounted on a printed circuit card the electrical components of which might be damaged due to overheating.

Due to the above, and because it is difficult to arrange for appropriate cooling of the lamp, it has not always been possible to successfully mount lamps furnished with effective LEDs. This is especially the case when the lamps have been mounted e.g. in closed small cavities.

### Brief description of the invention

The object of the present invention is to solve the afore mentioned drawbacks and to provide a lamp which, despite having an effective light source, e.g. containing a plurality of effective LEDs, can be mounted on the most various mounting sites, including mounting sites having only a small cavity for the lamp, and which lamp despite this function in the intended manner.

The object of the present invention is also to solve the afore mentioned drawbacks by providing a combination of such a lamp and a mounting site, such as a wall of a vehicle, for the lamp.

The lamp according to the invention is characterised in that
- it comprises a frame which is of a material having a good thermal conductivity,
- the at least one LED is attached to the frame in such a way that heat generated by the LED is transferred from the LED to the frame and
- the frame is positioned between the reflector and the lens and comprises a heat emitting surface for transferring heat generated by said at least one LED to the surroundings of the lamp.
   An essential concept of the present lamp is to make provisions for heat, which is generated by the light source of the lamp, to be transferred from inside the lamp to the outer room of the lamp instead for transferring the heat to the wall or a cavity into which the lamp has been mounted.
   Preferably, the heat emitting surface is located at a peripheral part of the frame and preferably the peripheral part is at the periphery of the lamp. These features provide for an easy design and mounting of the lamp to the mounting site.
   Preferably, the lamp comprises a plurality of LEDs which are mounted on a printed circuit board attached to a planar support piece of the frame in such a way that heat generated by the LEDs is transferred from the LEDs to the frame. Preferably, the printed circuit board comprises holes at the locations of the LEDs, whereby preferably, cooling buffers are provided in the holes, between the LEDs and the frame. These cooling buffers are made from a material, such as KERATHERM® having a good thermal conductivity (e.g. 3.0 W/mK). The buffers may preferably have a thickness of 1-2 mm. The cooling buffers provide for a simple design to positively and effectively transfer heat from the LEDs to the frame.
   The preferred embodiments of the invention are presented in the attached claims 2-11.
   The main advantages of the lamp according to the present invention is that it provides a construction which, despite the lamp being able to emit efficiently light, can be mounted on the most various mounting sites and provides a reliable function. These mounting sites include enclosed cavities e.g. in vehicles. Additionally, the lamp can easily be manufactured and the lamp is service free.
   The combination of the lamp and the mounting site is characterised in that
- the lamp comprises a frame which is of a material having a good thermal conductivity,
- the at least one LED is attached to the frame in such a way that heat generated by the LED is transferred from the LED to the frame,
- the frame is positioned between the reflector and the lens and comprises a heat emitting surface for transferring heat generated by said at least one LED to the surroundings of the lamp, and the heat emitting surface being positioned at an outer wall surface of the mounting site.

Preferably, the heat emitting surface is located at a peripheral part of the frame. This provides for an easy design and mounting of the lamp to the mounting site.

Preferred embodiments of the combination include those features mentioned in the attached claims 2-11.

The main advantages of the combination according to the present invention is that it provides a reliable and service free lighting construction, despite the lamp being able to efficiently emit light.

### Brief description of drawings

The invention is described in more detail with reference to the attached drawing in which,
Figure 1 illustrates a lamp according to the invention seen from the front,
Figure 2 illustrates the lamps seen from behind,
Figure 3 illustrates the lamp seen from the side,
Figure 4 illustrates a sectional view taken along line IV - IV in Figure 1,
Figure 5 illustrates mounting of the lamp to a mounting site,
Figure 6 illustrates the lamp shown as a sectional view and mounted in the mounting site shown in Figure 5,
Figure 7 shows an exploded view of the main parts of the lamp, and
Figure 8 illustrates a second example of the lamp according to the invention.

### Detailed description of the invention

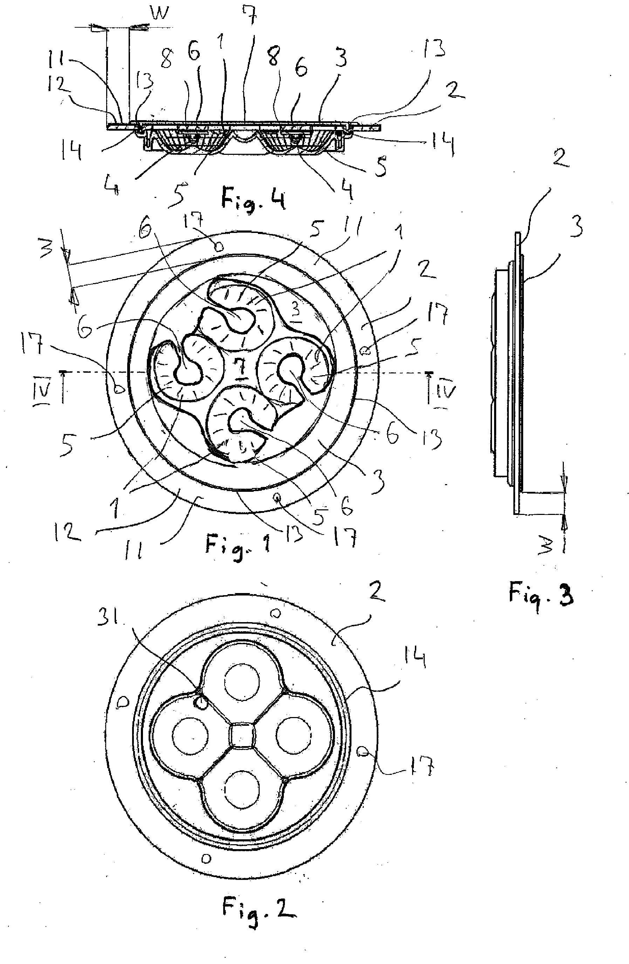

Figures 1 - 3 show a lamp according to the invention seen from the front, from the back and from the side, respectively.

The lamp comprises a reflector, generally designated with reference sign 1, a frame, generally designated with reference numeral 2, a lens 3, and four LEDs 4 as light source.

The reflector 1 is a part made of plastic, e.g. ABS, and it comprises four circular cups 5 having a reflecting surface arranged symmetrically around the center of the lamp. The reflector 1 is designed to form a housing of the lamp.

The LEDs 4 have been arranged symmetrically around the center of the lamp above the cups 5. The LEDs 4 are directed to send a light beam against respective cups 5 thereby being arranged to give light indirectly to the lens 3 and out from the lamp. From Figure 4 one can see two of these four LEDs 4 inside the lamp.

The frame 2 is a planar disc like piece having a peripheral part 11 and an inner part. Seen from the side, the frame 2 is positioned between the reflector 1 and the lens 3, c.f. Figure 4. The frame 2 has a circular outer periphery from which four finger parts 6 extend generally inwards toward the central area 7 of the lens 3 and the lamp, see Figure 1. At the free ends of each finger part 6 a LED 4 has been positioned so that the LED 4 is between the finger part 6 and the reflecting cup 5, see Figure 4.

The frame is made of aluminium or other material having a good thermal conductivity, such as copper. The frame 2 can easily be manufactured by punching from an aluminium plate. A frame made of steel does not provide for the same good thermal conductivity and cooling as aluminium or copper

The LEDs 4, which are of the type "Luxeon Power LED" (e.g. Luxeon PW 1W), are mounted on a printed circuit board 8 which best can be seen in Figure 7 which shows the lamp in an exploded view. The printed circuit board 8 contains the electrical components of the lamp and has been given the same form as the planar inner part of the frame 2, i.e. it has the form of a planar support piece and it contains similar finger parts 6a.

Holes 9 have been provided in the finger parts 6a of the printed circuit board at the location of the LEDs 4. Cooling buffers 10, which best can be seen in Figure 6, have been inserted in said holes 9 so that the LEDs abut these cooling buffers 10. The cooling buffers 10 are thus positioned between the LEDs and the frame 2 contacting the frame. The cooling buffers 10 are in a format of small circular plates, the diameter of which being typically 3-5 mm. The heat conductivity of the cooling buffers is good thus enabling heat generated from the LEDs to be efficiently transferred to the frame 2. The heat is transferred through the metallic bottom of the LEDs to the frame. The cooling buffers 10 are made from a material having a good thermal conductivity (e.g. 3.0 W/mK). Such a material is e.g. KERATHERM®. The buffers may preferably have a thickness of 1-2 mm. When the thickness is small heat is transferred very effectively from the bottom of the LED 4 to the frame 2. Alternatively, the LEDs, owing to the holes 9, can be positioned to directly (i.e. without cooling buffers) abut the frame 2. In such a case the planar bottom par of the LEDs 4 contact the frame 2.

Because the frame 2 is made of aluminium the finger parts 6 of the frame transfer heat very effectively to the whole frame 2, i.e. also to an outer peripheral area and the outer peripheral part 11 thereof. The peripheral part 11 of the frame 2 is defined by the outer periphery of the frame 2 and the periphery of the lens 3. The width of the outer peripheral part 11 is designated W, see Figures 1, 3 and 4. As the peripheral part 11 faces away from the lamp, it can emit heat away from the lamp in the same direction as the light is emitted from the lamp. Thus the peripheral part 11 surrounding the periphery of the lens 3 forms a heat emitting surface 12. The peripheral part 11 must have a minimum width W in order that it can emit the heat generated by the LEDs 4. It is impossible to give any specific values for the minimum value of the width W. However, as a general rule, when the effect of the LEDs and the number thereof increases, the minimum width also W increases. The width can be e.g. 10 mm. A person skilled in the art has no difficulty to find out a suitable width W for the peripheral area. Therefore, no attempt to define said width W by a formula presented here.

The lens 3 is preferably made of transparent PMMA plastic and it is glued to the frame 2. The glue is applied along a circumferential line 13 at the peripheral area of the lens 3, see Figures 1 and 4.

Also the reflector 1 is glued to the frame 2. The glue is applied along a circumferential line 14 at the periphery of the circular reflector part, see Figures 2 and 4.

In order that moisture inside the lamp can be removed from the lamp, the lamp comprises an opening which is sealed with a breathable material, such as film or sticker 31 made of Goretex® material, see Figure 2. This material forms a moisture barrier enabling moisture to come out from the lamp when the interior thereof warms up, but prevents moisture to enter from the surroundings to the interior of the lamp.

The electrical cable for the lamp is not shown in the Figures, but it is sealed so that moisture does not enter from the surroundings into the lamp. The result is a lamp having excellent durability, low energy consumption and excellent performance in cold and also wet environment. Additionally, it does not glare thanks to indirect illumination. The lamp can be designed for different voltages, e.g. 10-31 VDC.

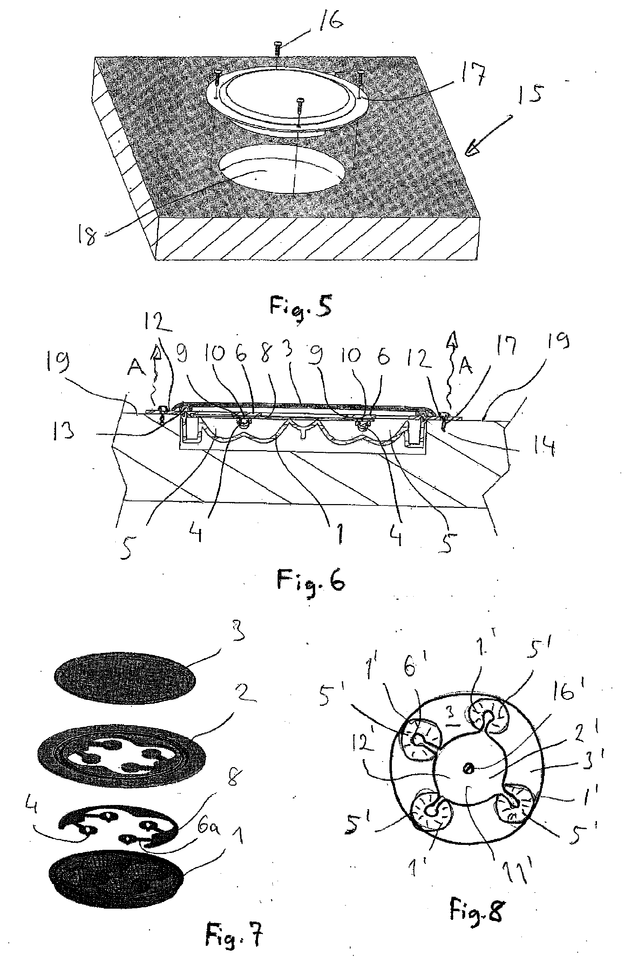

Figure 5 illustrates how the lamp is mounted to a mounting site in the form of a wall 15. The lamp is mounted with four screws 16 or similar elongated mounting means which pass through mounting holes 17 made into the peripheral part 11 of the frame 2. Alternatively, mounting means (not shown) clamping against the outer periphery of the frame can be applied.

The wall 15 may typically be the inner wall of a vehicle, such as a lorry or a train, but can in principle be any wall. A cavity 18, as shown in Figure 5, or a hole, made into the wall 15 is adapted to receive the lamp. As the cavity 18 is being totally closed when the lamp is mounted, heat generated inside the lamp cannot be transferred from the lamp to a location behind the wall 15. However, thanks to the peripheral part 11 of the frame 2 heat can be emitted to the surroundings of the lamp. Arrows A in Figure 6 showing the lamp mounted at the mounting site illustrate heat being emitted from the peripheral part 11 of the frame 2 and lamp to the surroundings of the lamp. Thus the peripheral part 11 with the heat emitting surface 12 is positioned at an outer, i.e. upper, wall surface 19 of the wall 15 and mounting site.

The lamp can be designed in different ways. Figure 8 shows a lamp seen from the front, and having another design than the lamp in Figures 1-7. In Figure 8 the heat emitting surface 12' is located in the center of the lamp and the reflecting cups 5' circumference the heat emitting surface 12'. Finger parts 6' extend from the heat emitting surface 12' towards the periphery of the lamp. Like in the example shown in Figures 1-7, the heat emitting surface 12' is formed of the frame 2' of the lamp, the frame being made of aluminium. The circular frame part which is positioned inside the inner periphery 30' of the lens 3' is a planar support piece which forms the heat emitting surface 12' like in the lamp of Figure 4. Seen from the side of the lamp, the frame 2' is positioned between the lens 3' of the lamp and the reflector 1' of the lamp. In the center of the lamp and the frame 2' is a screw 16' or alike fastening element for fastening the lamp to a fastening site. In other respect the technical construction of the lamp corresponds to the lamp of Figures 1-7

The invention has been described above only with reference to one preferable embodiment, and therefore it is emphasized that the present invention can be implemented in many different ways within the scope of the claims attached. Thus, e.g. the number of LEDs 4 may vary, the shape of the reflecting surface 5 may vary, and the design of the frame may vary. The frame can e.g. have a rectangular outer periphery.

## Claims

1. A lamp comprising a reflector (1, 1'), at least one LED (4) which is directed to emit light towards the reflector, and a light transparent lens (3, 3') for passing light reflected from the reflecting surface of the reflector (1, 1') to the surroundings of the lamp, **characterised in that**
- the lamp comprises a frame (2, 2') which is of a material having a good thermal conductivity,
- the at least one LED (4) is attached to the frame (2, 2') in such a way that heat generated by the LED is transferred from the LED to the frame (2, 2') and
- the frame (2) is positioned between the reflector (1) and the lens (3, 3') and comprises a heat emitting surface (12) for transferring heat (A) generated by said at least one LED (4) to the surroundings of the lamp.

2. A lamp according to claim 1, **characterised in that** the heat emitting surface (12) is located at a peripheral part (11) of the frame (2).

3. A lamp according to claim 1 or 2, **characterised in that** the lamp comprises a plurality of LEDs (4) which are mounted on a printed circuit board (8) attached to a planar support piece of the frame (2, 2') in such a way that heat generated by the LEDs is transferred from the LEDs to the frame (2, 2').

4. A lamp according to claim 3, **characterised in that** the printed circuit board (8) comprises holes (9) at the locations of the LEDs (4).

5. A lamp according to claim 4, **characterised in that** cooling buffers (10) are provided in the holes (9), between the LEDs (4) and the frame (2, 2')

6. A lamp according to claim 3, **characterised in that,** a plurality of finger parts (6, 6') extend from the heat emitting surface (12, 12') towards a central area (7) of the lens (3., 3'), whereby the LEDs (4) are positioned at the free ends of the finger parts.

7. A lamp according to claim 2, **characterised in that,** the frame (2) is a disc like piece the peripheral part (11) of which forms the heat emitting surface (12).

8. A lamp according to claim 7, **characterised in that,** the outer peripheral part (11) of the frame (2) comprises holes (17) for elongated fastening means (16) for mounting the lamp.

9. A lamp according to any preceding claim, **characterised in that** it comprises a breathable material (31) for forming a moisture barrier which seals the interior of the lamp against the surroundings.

10. A lamp according to claim 9, **characterised in that** the lens (3, 3') and the reflector (1, 1') are glued to the frame (2, 2).

11. A lamp according to any preceding claim, **characterised in that** the frame (2, 2') is made of aluminium.

12. A combination of a lamp and a mounting site (15), such as a wall of a vehicle, for the lamp, said mounting site (15) comprising an upper surface (19) and said lamp comprising a reflector (1), at least one LED (4) which is directed to emit light towards the reflector, and a light transparent lens (3) for passing light reflected from the reflecting surface of the reflector (1) to the surroundings of the lamp, **characterised in that**
- the lamp comprises a frame (2) which is of a material having a good thermal conductivity,
- the at least one LED (4) is attached to the frame (2) in such a way that heat generated by the LED is transferred from the LED to the frame (2),
- the frame (2) is positioned between the reflector (1) and the lens (3) and comprises a heat emitting surface (12) for transferring heat (A) generated by said at least one LED (4) to the surroundings of the lamp, and the heat emitting surface being positioned at an outer wall surface (19) of the mounting site.

13. A combination according to claim 12, **characterised in that** the heat emitting surface (12) is located at a peripheral part (11) of the frame (2).
